(19) Europäisches Patentamt
European Patent Office
Office européen des brevets

(11) **EP 2 834 464 B1**

(12) **EUROPÄISCHE PATENTSCHRIFT**

(45) Veröffentlichungstag und Bekanntmachung des Hinweises auf die Patenterteilung:
**29.06.2016  Patentblatt 2016/26**

(21) Anmeldenummer: **12714630.6**

(22) Anmeldetag: **02.04.2012**

(51) Int Cl.:
*E21D 23/12* (2006.01)     *G01C 5/04* (2006.01)

(86) Internationale Anmeldenummer:
**PCT/EP2012/055940**

(87) Internationale Veröffentlichungsnummer:
**WO 2013/149638 (10.10.2013 Gazette 2013/41)**

(54) **STREBAUSRÜSTUNG MIT AN DEREN SCHILDAUSBAUGESTELLEN VERLEGTEN SCHLAUCHWAAGEN**

FACE EQUIPMENT COMPRISING HOSE LEVELS PLACED ON THE SHIELD SUPPORT FRAMES OF SAID FACE EQUIPMENT

ÉQUIPEMENT DE TAILLE MUNI DE NIVEAUX À EAU POSÉS SUR SES ÉLÉMENTS DE SOUTÈNEMENT BOUCLIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.02.2015  Patentblatt 2015/07**

(73) Patentinhaber: **Rag Aktiengesellschaft 44623 Herne (DE)**

(72) Erfinder:
• **JUNKER, Martin 45133 Essen (DE)**
• **MOZAR, Armin 59073 Hamm (DE)**

(74) Vertreter: **Müller, Karl-Ernst et al Turmstraße 22 40878 Ratingen (DE)**

(56) Entgegenhaltungen:
WO-A1-2009/103303     WO-A1-2011/144223
DE-A1-102009 026 011     US-A- 4 452 078

EP 2 834 464 B1

**Beschreibung**

Die Erfindung betrifft eine Strebausrüstung für die maschinelle Gewinnung im Langfrontbau, insbesondere im untertätigen Steinkohlenbergbau, mit einem längs der Abbaufront angeordneten Strebförderer, einem längs des Strebförderers verfahrbaren Gewinnungsmittel und mit im Winkel zum Strebförderer daran angeschlagenen Schildausbaugestellen.

Eine Strebausrüstung mit den vorgenannten Merkmalen ebenso wie ein Verfahren zum Steuern einer derartigen Strebausrüstung sind in der WO 2009/103303 beschrieben. Hierzu ist in der vorgenannten Schrift im einzelnen dargelegt, dass die Automatisierung einer derartigen Steuerung der Strebausrüstung allgemein von der Kenntnis der Stellung der Strebausrüstung im Raum, insbesondere aber von der Kenntnis der jeweils im Bereich des vorderen Endes der Hangendkappe der Schildausbaugestelle bestehenden Höhe der Streböffnung abhängig ist. Die Ermittlung der betreffenden Basiswerte für die Berechnung der Streböffnungshöhe geschieht diesem Stand der Technik über an den Hauptbestandteilen der einzelnen Schildausbaugestelle wie Bödenkufe, Bruchschild, Traglenkern und Hangendkappe angebrachten Neigungssensoren, mittels derer die Neigung der jeweiligen Bauteile gegen die Vertikale ermittelt wird. Durch Vergleich der aufgenommenen Daten mit in einer Auswerteeinheit abgelegten, die geometrische Ausrichtung der Bauteile des Schildausbaugestells und deren Bewegung während des Schreitens definierenden Basisdaten kann die jeweils bankrechte Höhe des Schildausbaugestells am vorderen Ende von dessen Hangendkappe berechnet werden, die ein Maß für die Höhe der Streböffnung darstellt.

Mit der bekannten Vorgehensweise ist der Nachteil einer aufwendigen Rechenarbeit verbunden, die zudem eine zutreffende Erfassung der für die jeweilige Bauform des eingesetzten Schildausbaugestells geltenden Basisdaten und die Erstellung eines anwendbaren Algorithmus für die Berechnung der bankrechten Höhe des Schildausbaugestells voraussetzt.

Abgesehen von der vorstehend genannten mittelbaren Bestimmung der Höhe der Streböffnung ist eine unmittelbare Erfassung von Höhendatten mittels eines Schlauchwaagensystems beim Vortrieb von Tunneln aus der DE 43 33 032 C2 bekannt. Hierbei ist zwischen der Tunnelvortriebsmaschine und einem Referenzpunkt ein Schlauchwaagesystem angeordnet, dessen geschlossener, flüssigkeitsgefüllter Schlauch mit einem Ende der Referenzhöhe und mit dem anderen Ende zur Bestimmung weiterer Größen der Messhöhe der Tunnelvortriebsmaschine zugeordnet ist.

Der Erfindung liegt die Aufgabe zugrunde, die Ermittlung der Höhe der Streböffnung bei einer gattungsgemäßen Strebausrüstung zu vereinfachen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass zur Ermittlung der der Höhe der Streböffnung entsprechenden Schildhöhe der ausgefahrenen Schildausbaugestelle an einzelnen Schildausbaugestellen eine zwischen dessen Hangendkappe und dessen Bodenkufe verlegte Schlauchwaage mit einem flüssigkeitsgefüllten Schlauch verlegt ist und am kufenseitigen Ende des Schlauches ein Drucksensor angeordnet ist, wobei zusätzlich zur Berücksichtigung einer Längsund/oder Querneigung des Schildausbaugestells bei der Höhenermittlung an der Hangendkappe eine die Messung von wenigstens zwei Kippachsen gegen die Horizontale ermöglichende Neigungsmessanordnung angeordnet ist und Drucksensor und Neigungsmessanordnung mit einer Auswerte- und Steuereinheit verbunden sind.

Mit der Erfindung ist der Vorteil verbunden, dass mit der an einzelnen Schildausbaugestellen oder auch an jedem Schildausbaugestell angeordneten Schlauchwaage über die mittels der Druckmessung erfasste Höhe der Flüssigkeitssäule der Abstand zwischen den beiden Enden des Schlauches, somit zwischen Hangendkappe und Bodenkufe des Schildausbaugestells, ermittelt und unter Berücksichtigung der geometrisch festliegenden Lage der Schlauchenden an Hangendkappe und Bodenkufe die absolute Höhe des ausgefahrenen Schildausbaugestells zwischen der Oberkante der Hangendkappe und der Unterkante der Bodenkufe berechnet werden kann. Da die an der Hangendkappe erfindungsgemäß angeordnete Neigungsmessanordnung zusätzliche Informationen über die Querneigung und die Längsneigung der Hangendkappe und damit deren Stellung im Raum liefert, kann das Ergebnis der Höhenermittlung für das ausgefahrene Schildausbaugestell unter Anwendung der trigonometrischen Rechenformeln in die bankrechte Höhe des Schildausbaugestells und damit die bankrechte Höhe der Streböffnung zwischen dem Hangenden und dem Liegenden umgerechnet werden.

Nach einem ersten Ausführungsbeispiel der Erfindung ist hinsichtlich der Ausführung der Schlauchwaage vorgesehen, dass die Schlauchwaage als geschlossene Schlauchwaage mit einem beidseitig geschlossenen, druckbefüllten und an einen Druckspeicher angeschlossenen Schlauch ausgebildet ist. Der Vorteil einer beidseitig geschlossenen Schlauchwaage besteht im wesentlichen darin, dass eine barometrische Korrektur nicht erforderlich ist, und dass wegen des erhöhten Druckniveaus in dem druckbefüllten Schlauch ausgasungsbedingte Dichteveränderungen der Flüssigkeit (beispielsweise gelöste Luft) eine geringere und damit vernachlässigbare Rolle spielen. Ein Nachteil der geschlossenen Schlauchwaage besteht beispielsweise darin, dass die in dem Schlauch enthaltene Flüssigkeit vollständig gekammert ist. Damit kann sich aufgrund von Verdrückungen oder Temperaturveränderungen des Schlauches wie auch der Flüssigkeit das Druckniveau ändern. Um diesen Einfluss zu minimieren, ist an dem Schlauch eine vorgespannte Druckspeicherblase mit einem gegen die Flüssigkeitssäule wirkenden vorgespannten Gas angeschlossen. Hierdurch werden auch hydraulische Druckschwankungen beispielweise durch Vibrationen gedämpft und zugleich werden die Drucksensoren vor möglichen Druckspitzen geschützt. Damit kann auch der Meßbereich der Drucksensoren zugunsten der Meßgenauigkeit verringert werden.

Alternativ kann vorgesehen sein, dass die Schlauchwaage als einseitig offene Schlauchwaage mit einem an einen den höchsten Punkt der Schlauchwaage bildenden Überlauf, beispielsweise in Form eines am Schildausbaugestell angeordneten Überlaufbeckens, angeschlossenen Schlauch ausgebildet ist. Dabei bestehen die Vorteile einer derartigen, einseitig offenen Schlauchwaage darin, dass eine einfache hydrostatische Druck-/Höhenbestimmung gegeben ist. Eine Beeinflussung der Messung durch Schlauchverdrückungen oder temperaturinduzierte Innendruckveränderungen ist ausgeschlossen, und es ist auch nur eine geringe Empfindlichkeit gegen dynamische Einflüsse in Form von mechanischen Schwingungen gegeben. Nachteilig ist, dass für Präzisionsmessungen eine barometrische Korrektur erforderlich ist. Außerdem können sich in der Anordnung der offenen Schlauchwaage im Schildausbaugestell Anordnungsprobleme ergeben, da das offene Ende des Schlauches mit dem Überlaufbecken immer an der höchsten Stelle liegen muss. Bei in untertätigen Abbaubetrieben nicht auszuschließenden wechselnden Einsatzbedingungen kann dies Umbaumaßnahmen erfordern. Auch ist ein Überlauf der Schlauchwaage bzw. eine Nachbefüllung sicherzustellen, um ein ordnungsgemäßes Arbeiten der Schlauchwaage zu erreichen.

Nach einem Ausführungsbeispiel der Erfindung kann vorgesehen sein, dass der am kufenseitigen Ende des Schlauches angeordnete Drucksensor ein Absolutdrucksensor ist.

Um die Genauigkeit der Druckmessung zu verbessern und systembedingte Fehler zu minimieren, kann nach einem Ausführungsbeispiel der Erfindung vorgesehen sein, dass zusätzlich am hangendkappenseitigen Ende des Schlauches ein zweiter Drucksensor angeordnet ist. In einem solchen Zweisensorensystem kann anhand der Differenz der angezeigten Drücke auf die hydrostatische Höhendifferenz geschlossen werden. Dabei ist mit einem Zweisensorsystem der Vorteil verbunden, dass aufgrund der Verwendung der Differenz der angezeigten Drücke eine barometrische Korrektur bei atmosphärischen Luftdruckänderungen möglich ist. Da die Höhe anhand des Differenzdruckes beider Sensoren abgeleitet wird, kann auch bei Schlauchinnendruckveränderungen, beispielsweise aufgrund einer Schlauchbiegung oder Schlauchverdrückung, anhand der gemessenen Druckdifferenz die Höhendifferenz fehlerarm gemessen werden.

Dabei kann nach einem Ausführungsbeispiel der Erfindung vorgesehen sein, dass auch der zweite Drucksensor ein Absolutdrucksensor ist.

Soweit Absolutdrucksensoren im Vergleich mit ebenfalls bekannten Relativdrucksensoren etwas ungenauer in ihren Messergebnissen und auch teurer in der Anschaffung sind, können bei Einsatz von zwei Drucksensoren auch Relativdrucksensoren als Drucksensoren eingesetzt werden, die jeweils den Atmosphärendruck gegen den Flüssigkeitsdruck messen.

Soweit es wünschenswert ist, die freie Strebhöhe möglichst nahe am Kohlenstoß, insbesondere im Bereich des vorderen Endes der Hangendkappe des Schildausbaugestells zu bestimmen, ist die Einbeziehung der Höhenlage des an den Kohlenstoß angrenzenden Strebförderers zweckmäßig. Zur Einbeziehung dieser Höhenlage des Strebförderers in die Ermittlung der Strebhöhe kann in einer weiteren Ausführungsform der Erfindung vorgesehen sein, dass sich der zwischen Hangendkappe und Bodenkufe des Schildausbaugestells verlaufende Schlauch über den kufenseitigen Drucksensor hinaus bis zum Strebförderer erstreckt und an dem am Strebförderer befestigten Ende des Schlauches ein Drucksensor angeordnet ist. Somit kann über die Messung der Flüssigkeitshöhe zwischen dem Strebförderer und der Hangendkappe der Abstand zwischen den beiden vorgenannten Bauteilen bestimmt und in der angegebenen Weise in die bankrechte Strebhöhe umgerechnet werden.

In einer alternativen Ausführungsform kann dabei vorgesehen sein, dass sich der zwischen der Bodenkufe und der Hangendkappe verlaufende Schlauch über den hangendkappenseitigen Drucksensor hinaus bis zum Strebförderer erstreckt und an dem am Strebförderer befestigten Ende des Schlauches ein Drucksensor angeordnet ist. Bei dieser Ausführungsform können zwei Höhendifferenzen erfasst werden, nämlich zum einen die Höhendifferenz zwischen der Hangendkappe und der Bodenkufe und zum anderen die Höhendifferenz zwischen der Hangendkappe und dem Strebförderer. Insofern sind die Grundlagen für die Berechnung der bankrechten Strebhöhe noch verbessert.

Soweit ein von dem Strebförderer bis zur Hangendkappe durchgehender Schlauch Probleme beim Ablauf der Gewinnungsarbeit verursachen kann, ist nach einem Ausführungsbeispiel der Erfindung vorgesehen, zwei getrennte Schlauchwaagen einzusetzen, nämlich eine zwischen Hangendkappe und Bodenkufe des Schildausbaugestells verlegte Schlauchwaage und eine zweite zwischen Bodenkufe und Strebförderer verlegte Schlauchwaage. Damit die Höhe zwischen dem Strebförderer und der Hangendkappe ermittelbar ist, müssen hierbei die bodenkufenseitigen Enden der Schläuche der beiden Schlauchwaagen eine höhengleiche Koppelstelle bilden.

Um einen bewegungstechnischen Spielraum hinsichtlich des zwischen Schildausbaugestell und Strebförderer verlaufenden Schlauches bei den Schreitbewegungen des Schildausbaugestells gegenüber dem Strebförderer auszugleichen, kann vorgesehen sein, dass der zwischen Schildausbaugestell und Strebförderer verlaufende Schlauch bzw. Schlauchabschnitt von einer Rückholfeder beaufschlagt ist.

Nach einem Ausführungsbeispiel der Erfindung kann vorgesehen sein, dass eine am gleichen Bauteil des Schildausbaugestells angeordnete Neigungsmessanordnung und ein Drucksensor jeweils in einem gemeinsamen Sensorgehäuse mit gemeinsamer Stromversorgung und Messleitungsanschluss angeordnet sind.

Zur Verbesserung der Datengrundlage für eine rechnerische Ermittlung der bankrechten Strebhöhe ist es zweckmäßig, wenn nach einem Ausführungsbeispiel der Erfindung zusätzlich zu der an der Hangendkappe des Schildausbaugestells anordneten Neigungsmessanordnung an dessen Bodenkufe eine weitere Neigungsmessanordnung gleichen Aufbaus angeordnet ist, da in diesem Fall auch die Lage der Bodenkufe im Raum berücksichtigt werden kann.

Soweit die Höhenlage des Strebförderers in die Höhenermittlung der Streböffnung einbezogen wird, ist auch die Kenntnis der Lage des Strebförderers im Raum von Bedeutung, und insoweit ist nach einem Ausführungsbeispiel der Erfindung vorgesehen, dass am Strebförderer eine Neigungsmessanordnung angeordnet ist.

Nach alternativen Ausführungsbeispielen der Erfindung kann die Neigungsmessanordnung aus zwei einaxialen Neigungssensoren oder jeweils aus einem zweiaxialen Neigungssensor bestehen. Auch der Einsatz eines an sich bekannten dreiaxialen Neigungssensors ist möglich, auch soweit die Messergebnisse lediglich bezüglich zweier Kippachsen benötigt werden.

In. der Zeichnung sind Ausführungsbeispiele der Erfindung wiedergegeben, welche nachstehend beschrieben sind. Es zeigen:

Fig. 1a  ein Schildausbaugestell mit integrierter Schlauchwaage und Neigungsmeßanordnung in einer schematischen Seitenansicht,

Fig. 1b  den Gegenstand der Figur 1a in Vorderansicht,

Fig. 2  ein Ausführungsbeispiel des Schildausbaugestells gemäß Fig. 1a,b als Bestandteil einer Strebausrüstung mit einer zusätzlich zum Strebförderer weitergeführten Schlauchwaage,

Fig. 3  den Gegenstand der Figur 2 in einer anderen Ausführungsform,

Fig. 4  den Gegenstand der Figur 2 bzw. Figur 3 in wiederum einer weiteren Ausführungsform

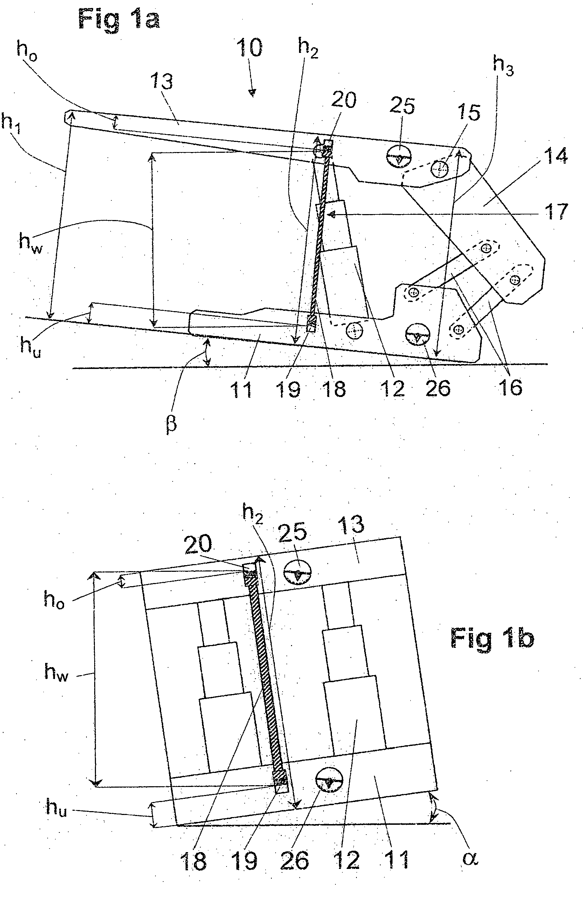

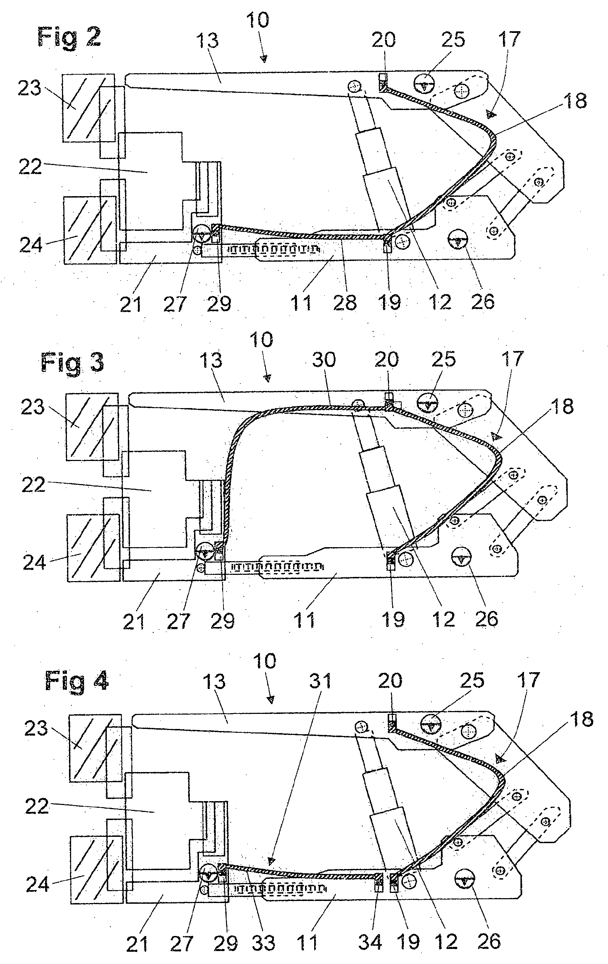

Das in Figur 1 schematisch dargestellte Schildausbaugestell 10 umfasst zunächst eine Bodenkufe 11, auf der in paralleler Anordnung zwei Stempel 12 angesetzt sind, von denen in Figur 1a nur ein Stempel erkennbar ist und die an ihrem oberen Ende eine Hangendkappe 13 tragen. Während die Hangendkappe 13 an ihrem vorderen (linken) Ende in Richtung einer in Figur 1a nicht dargestellten, jedoch aus Figuren 2 bis 4 ersichtlichen Gewinnungsmaschine vorsteht, ist an dem hinteren (rechten) Ende der Hangendkappe 13 ein Bruchschild 14 mittels eines Gelenks 15 angelenkt, wobei das Bruchschild 14 von in der Seitenansicht zwei auf der Bodenkufe 11 ruhenden Traglenkern 16 gestützt ist.

An dem Schildausbaugestell 10 ist eine Schlauchwaage 17 mit einem zwischen Hangendkappe 13 und Bodenkufe 11 verlegten Schlauch 18 angeordnet, dessen oberes Ende an der Hangendkappe 13 angeordnet und dessen unteres Ende an der Bodenkufe 11 angeordnet ist. An beiden Enden sind jeweils Drucksensoren angeordnet, und zwar an dem an der Bodenkufe 11 angeordneten Ende des Schlauches 18 ein unterer Drucksensor 19 und an dem an der Hangendkappe 13 angeordneten Ende des Schlauches 18 ein oberer Drucksensor 20. Bei dem dargestellten Ausführungsbeispiel ist die Schlauchwaage 17 als geschlossene Schlauchwaage mit einem geschlossenen, mit einer geeigneten Flüssigkeit druckbefüllten Schlauch 18 ausgebildet, der zudem in einer nicht dargestellten, jedoch vorteilhaften Weise an eine Druckspeicherblase als Druckspeicher angeschlossen ist. Als Flüssigkeit ist der Einsatz einer Flüssigkeit anzustreben, die nur wenig Gas aufnehmen bzw. lösen kann. Der Einfachheit halber geht das Ausführungsbeispiel von der Befüllung des Schlauchs 18 mit Wasser aus, welches zudem im Bereich der Strebausrüstung aus einer Strebbedüsung zur Verfügung steht. Mittels der beiden entweder als Absolutdrucksensoren oder auch als den Atmosphärendruck gegen den Flüssigkeitsdruck messende Relativdrucksensoren ausgebildeten Drucksensoren 19 und 20 lässt sich die Höhe der Flüssigkeitssäule $h_w$ unabhängig von der Verlegungslänge des Schlauches 18 unmittelbar bestimmen. Soweit das obere Ende des Schlauches 18 mit dem daran angeordneten oberen Drucksensor 20 einen Abstand $h_o$ von der Oberkante der Hangendkappe 13 einhält und entsprechend das untere Ende des Schlauches 18 mit dem daran angeordneten unteren Drucksensor 19 einen Abstand $h_u$ von der Unterkante der Bodenkufe 11 einhält, ergibt sich im Bereich der Schlauchwaage 17 die Gesamthöhe des Schildausbaugestells mit

$$h_2 = h_{\ddot{u}} + h_o + h_w$$

Soweit jeweils die bankrechte Höhe des Schildausbaugestells 10 als senkrechter Abstand zwischen der Hangendkappe 13 und der Bodenkufe 11 zu ermitteln ist, entspricht bei einer waagerechten Stellung des Schildausbaugestells 10 diese bankrechte Höhe auch der messbaren Höhe der Flüssigkeitssäule. In der Praxis kommt es jedoch zu von der waagerechten Idealstellung der Schildausbaugestelle abweichenden Stellungen eines Schildausbaugestells 10 im Strebraum, wodurch die bankrechte Höhe des Schildausbaugestells 10 von der ausschließlich als vertikaler Abstand der Drucksensoren voneinander messbaren Höhe der Wassersäule der Schlauchwaage 17 abweicht. Daher muss diese Höhe der Wassersäule $h_w$ unter Berücksichtigung von Längsneigungen oder Querneigungen des Schildausbaugestells 10 in die jeweils bankrechte Höhe $h_2$ umgerechnet werden. Zur Ermittlung von für diese Umrechnung erforderlichen Daten ist bei dem dargestellten Ausführungsbeispiel sowohl an der Hangendkappe 13 als auch an der Bodenkufe 11 jeweils eine Neigungsmessanordnung 25 bzw. 26 angebracht, die wahlweise aus zwei einaxialen Neigungssensoren, einem zweiaxialen oder auch einem dreiaxialen Neigungssensor besteht. Wichtig ist, daß die jeweils eingesetzte Neigungsmessanordnung eine Messung von wenigstens zwei Kippachsen gegen die Horizontale ermöglicht.

Bei dem in Figur 1a dargestellten Ausführungsbeispiel ist eine durch den Winkel β verdeutlichte Längsneigung des Schildausbaugestells 10 angenommen, wobei gleichzeitig entsprechend der Voransicht des Schildausbaugestells in Figur 1b eine Querneigung des Schildausbaugestells entsprechend Winkel α angenommen ist. Bei einer derartigen Lage des Schildausbaugestells 10 im Raum ergibt sich die bankrechte Höhe $h_2$ des Schildausbaugestells 10 zu

$$h_2 = h_u + h_o + h_w / (\cos \alpha \cdot \cos \beta)$$

Andere Schildhöhen im Schildausbaugestell, wie beispielsweise durch $h_1$ bzw. $h_3$ gekennzeichnet, können trigonometrisch unter Nutzung der Längsneigungs- bzw. Querneigungswinkel berechnet werden, wobei es in der Praxis im wesentlichen auf die Ermittlung der Höhe $h_1$ im vorderen Bereich der Hangendkappe 13 ankommt, um Kollisionen mit der auf dem zugehörigen Strebförderer fahrenden Gewinnungsmaschine zu vermeiden. Die entsprechenden, an sich bekannten Raumverhältnisse ergeben sich dabei aus den in den Figuren 2 bis 4 dargestellten Ausführungsbeispielen.

Bei dem in Figur 2 dargestellten Ausführungsbeispiel ist nun zusätzlich zu dem Schildausbaugestell 10 auch die Lage eines Strebförderers 21 sowie einer darauf verfahrbaren, als Walzenschrämlader ausgebildeten Gewinnungsmaschine 22 mit einer Hangendwalze 23 und einer Liegendwalze 24 ersichtlich. Dabei ergibt sich aus Figur 2 wiederum die Anbringung einer Schlauchwaage 17 am Schildausbaugestell 10, wobei nunmehr der Schlauch 18 in einem gebogenen Verlauf dargestellt ist, soweit der Verlauf des Schlauches 18 im einzelnen letztlich von der jeweils ausgefahrenen Höhe der Stempel 12 des Schildausbaugestells 10 abhängt. Auf die Bestimmung der als Höhenmaß zu ermittelnden Größe $h_w$ hat insoweit der Verlauf des Schlauches keinen Einfluss. Am oberen, hangendkappenseitigen Ende des Schlauches 18 ist wiederum ein oberer Drucksensor 20 angeordnet, und am unteren, bodenkufenseitigen Ende des Schlauches 18 ein unterer Drucksensor 19. Wiederum ist an der Hangendkappe 13 eine Neigungsmessanordnung 25 und an der Bodenkufe 11 eine Neigungsmessanordnung 26 angeordnet. Um insbesondere im Hinblick auf eine Kollisionsüberwachung zwischen der auf dem Strebförderer 21 geführten Gewinnungsmaschine 22 und dem vorderen, in Richtung der Gewinnungsmaschine 22 vorkragenden Ende der Hangendkappe 13 die Bestimmung der Höhenlage des die Gewinnungsmaschine 22 tragenden Strebförderers 21 einzubeziehen, ist bei dem in Figur 2 dargestellten Ausführungsbeispiel der Schlauch 18 der Schlauchwaage 17 über den bodenkufenseitigen unteren Drucksensor 19 hinaus mit einem Schlauchast 28 bis zum Strebförderer 21 geführt, wobei das Ende des Schlauchastes 28 an dem Strebförderer 21 befestigt ist. Entsprechend ist an dem strebfördererseitigen Ende des Schlauchastes 28 ebenfalls ein Drucksensor 29 angeordnet. Somit lässt sich neben der Höhe der auf die Ausfahrhöhe des Schildausbaugestells bezogenen Wassersäule auch der Höhenabstand zwischen dem Strebförderer 21 und der Bodenkufe 11 bzw. sogleich der Hangendkappe 13 bestimmen, wobei die jeweiligen Höhe der Wassersäule wiederum unter Berücksichtigung von Längs- und/oder Querneigungen von Schildausbaugestell 10 und Strebförderer 21 umzurechnen ist. Entsprechend ist an dem Strebförderer 21 auch eine Neigungsmessanordnung 27 angebracht.

Das in Figur 3 dargestellte Ausführungsbeispiel unterscheidet sich von dem in Figur 2 dargestellten und zuvor beschriebenen Ausführungsbeispiel lediglich dadurch, daß die Einbeziehung der Höhenlage des Strebförderers 21 mittels eines zusätzlichen Schlauchastes 30 verwirklicht ist, der durch eine Weiterführung des Schlauches 18 der an dem Schildausbaugestell 10 verlegten Schlauchwaage 17 über den oberen, an der Hangendkappe 13 angebrachten Drucksensor 20 hinaus bis zum Strebförderer 21 gegeben ist. Wiederum ist am strebfördererseiten Ende des Schlauchastes 30 der zugehörige Drucksensor 29 angebracht, und es ist an dem Strebförderer 21 auch eine Neigungsmessanordnung 27 angebracht.

Ein wiederum alternatives Ausführungsbeispiel ergibt sich aus Figur 4, bei welchem neben der an dem Schildausbaugestell 10 verlegten Schlauchwaage 17 mit dem Schlauch 18 eine unabhängige zweite Schlauchwaage 31 mit einem zwischen dem Strebförderer 21 und der Bodenkufe 11 verlegten Schlauch 33 angeordnet ist. Soweit an dem am Strebförderer 21 angebrachten Ende des Schlauches 33 wiederum der entsprechende Drucksensor 29 angebracht ist, ist an dem der Bodenkufe 11 des Schildausbaugestells 10 angebrachten Ende des Schlauches 33 ein weiterer Drucksensor 34 vorgesehen. Um die Einbeziehung des über die zweite Schlauchwaage 31 ermittelten Höhenunterschiedes zwischen Strebförderer 21 und Bodenkufe 11 in die Ermittlung der Gesamthöhe der Strebausrüstung und damit der Streböffnung verwirklichen zu können, ist dafür Sorge zu tragen, daß die an den Enden von Schlauch 18 und Schlauch 33 jeweils an der Bodenkufe 11 angebrachten Drucksensoren 19 und 34 eine höhengleiche Koppelstelle bilden. Mit dieser Ausführungsform ist der Vorteil verbunden, daß insbesondere wegen der besonderen Beanspruchung des zwischen Strebförderer 21 und Bodenkufe 11 verlaufenden Schlauches 33 durch die im Betrieb der Strebausrüstung ständig wiederkehrenden Relativbewegungen zwischen Schildausbaugestell 10 und Strebförderer 21 die zweite Schlauchwaage 31 mit zugehörigem Schlauch 33 leicht auswechselbar ist, ohne daß die am Schildausbaugestell 10 verlegte Schlauchwaage 17 berührt ist, so daß die Höhenmessung mittels der Schlauchwaage 17 nicht unterbrochen werden muss.

Die in der vorangehenden Beschreibung oder in den nachstehenden Ansprüchen oder auf den beiliegenden Zeichnungen dargelegten Merkmale, in ihren spezifischen Formen oder im Sinne eines Mittels zur Durchführung der dargelegten Funktion oder einer Methode oder eines Prozesses zum Erreichen des dargelegten Ergebnisses ausgedrückt, können getrennt oder in einer beliebigen Kombination dieser Merkmale zur Durchführung der Erfindung in ihren verschiedenen Formen verwendet werden.

**Patentansprüche**

1. Strebausrüstung für die maschinelle Gewinnung im Langfrontbau, insbesondere im untertätigen Steinkohlenbergbau, mit einem längs der Abbaufront angeordneten Strebförderer (21), einem längs des Strebförderers (21) verfahrbaren Gewinnungsmittel (22) und mit im Winkel zum Strebförderer (21) daran angeschlagenen Schildausbaugestellen (10), **dadurch gekennzeichnet, dass** zur Ermittlung der der Höhe der Streböffnung entsprechenden Schildhöhe der ausgefahrenen Schildausbaugestelle (10) an einzelnen Schildausbaugestellen (10) eine zwischen dessen Hangendkappe (13) und dessen Bodenkufe (11) verlegte Schlauchwaage (17) mit einem flüssigkeitsgefüllten Schlauch (18) verlegt und am kufenseitigen Ende des Schlauches (18) ein Drucksensor (19) angeordnet ist, wobei zusätzlich zur Berücksichtigung einer Längs- und/ oder Querneigung des Schildausbaugestells (10) bei der Höhenermittlung an der Hangendkappe (13) eine die Messung von wenigstens zwei Kippachsen gegen die Horizontale ermöglichende Neigungsmessanordnung (25) angeordnet ist und Drucksensor (19) und Neigungsmessanordnung (25) mit einer Auswerte- und Steuereinheit verbunden sind.

2. Strebausrüstung nach Anspruch 1, **dadurch gekennzeichnet, dass** die Schlauchwaage (17) als geschlossene Schlauchwaage mit einem beidseitig geschlossenen, druckbefüllten und an einen Druckspeicher angeschlossenen Schlauch (18) ausgebildet ist.

3. Strebausrüstung nach Anspruch 1, **dadurch gekennzeichnet, dass** die Schlauchwaage (17) als einseitig offene Schlauchwaage mit einem an einen den höchsten Punkt der Schlauchwaage (17) bildenden Überlauf angeschlossenen Schlauch (18) ausgebildet ist.

4. Strebausrüstung nach einem der Ansprüche 1 bis 3, **dadurch gekennzeichnet, dass** der am kufenseitigen Ende des Schlauches (18) angeordnete Drucksensor (19) ein Absolutdrucksensor ist.

5. Strebausrüstung nach einem der Ansprüche 1 bis 4, **dadurch gekennzeichnet, dass** zusätzlich am hangendkappenseitigen Ende des Schlauches (18) ein zweiter Drucksensor (20) angeordnet ist.

6. Strebausrüstung nach Anspruch 5, **dadurch gekennzeichnet, dass** der zweite Drucksensor (20) ein Absolutdrucksensor ist.

7. Strebausrüstung nach einem der Ansprüche 1 bis 3 und 5, **dadurch gekennzeichnet, dass** die beiden an den kufenseitigen und hangendkapperiseitigen Enden des Schlauches (18) angeordneten Drucksensoren (19, 20) jeweils den Atmosphärendruck gegen den Flüssigkeitsdruck messende Relativdrucksensoren sind.

8. Strebausrüstung nach einem der Ansprüche 1 bis 7, **dadurch gekennzeichnet, dass** sich der zwischen Hangendkappe (13) und Bodenkufe (11) des Schildausbaugestells (10) verlaufende Schlauch (18) über den kufenseitigen Drucksensor (19) hinaus bis zum Strebförderer (21) erstreckt und an dem am Strebförderer (21) befestigten Ende des Schlauches (18, 28) ein Drucksensor (29) angeordnet ist.

9. Strebausrüstung nach einem der Ansprüche 1 bis 7, **dadurch gekennzeichnet, dass** sich der zwischen der Bodenkufe (11) und der Hangendkappe (13) verlaufende Schlauch (18) über den hangendkappenseitigen Drucksensor (20) hinaus bis zum Strebförderer (21) erstreckt und an dem am Strebförderer (21) befestigten Ende des Schlauches (18, 30) ein Drucksensor angeordnet ist.

10. Strebausrüstung nach einem der Ansprüche 1 bis 7, **dadurch gekennzeichnet, dass** zwischen der Bodenkufe (11) des Schildausbaugestells (10) und dem Strebförderer (21) als zusätzliche Schlauchwaage (31) ein gesonderter, an beiden Enden geschlossener flüssigkeitsgefüllter Schlauch (33) mit jeweils endseitig angeschlossenen Drucksensoren (29, 34) verlegt ist und der an der Bodenkufe (11)

des Schildausbaugestells (10) befestigte Drucksensor (34) mit dem am Ende des zwischen Hangendkappe (13) und Bodenkufe (11) des Schildausbaugestells (10) verlegten Schlauches (18) angeordneten Drucksensor (19) eine höhengleiche Koppelstelle bildet.

11. Strebausrüstung nach einem der Ansprüche 8 bis 10, **dadurch gekennzeichnet, dass** der zwischen Schildausbaugestell (10) und Strebförderer (21) verlaufende Schlauch (33) bzw. Schlauchast (28, 30) von einer Rückholfeder beaufschlagt ist.

12. Strebausrüstung nach einem der Ansprüche 1 bis 11, **dadurch gekennzeichnet, dass** eine am gleichen Bauteil des Schildausbaugestells (10) angeordnete Neigungsmessanordnung und ein Drucksensor jeweils in einem gemeinsamen Sensorgehäuse mit gemeinsamer Stromversorgung und Messleitungsanschluss angeordnet sind.

13. Strebausrüstung nach einem der Ansprüche 1 bis 12, **dadurch gekennzeichnet, dass** zusätzlich zu der an der Hangendkappe (13) des Schildausbaugestells (10) anordneten Neigungsmessanordnung (25) an dessen Bodenkufe (11) eine weitere Neigungsmessanordnung (26) gleichen Aufbaus angeordnet ist.

14. Strebausrüstung nach einem der Ansprüche 8 bis 11, **dadurch gekennzeichnet, dass** am Strebförderer (21) eine Neigungsmessanordnung (27) angeordnet ist.

15. Strebausrüstung nach einem der Ansprüche 1, 13 oder 14, **dadurch gekennzeichnet, dass** die Neigungsmessanordnung (25, 26, 27) aus zwei einaxialen Neigungssensoren besteht.

16. Strebausrüstung nach einem der Ansprüche 1, 13 oder 14, **dadurch gekennzeichnet, dass** die Neigungsmessanordnung (25, 26, 27) aus einem zweiaxialen Neigungssensor besteht.

17. Strebausrüstung nach einem der Ansprüche 1, 13 oder 14, **dadurch gekennzeichnet, dass** die Neigungsmessanordnung (25, 26, 27) aus einem dreiaxialen Neigungssensor besteht.

**Claims**

1. Face equipment for mechanical extraction in longwall mining, in particular in the underground hard coal mining industry, with a face conveyor (21) arranged along the coal face, an extraction means (22) that can be moved along the face conveyor (21), and shield support frames (10) fastened at an angle to the face conveyor (21), **characterized in that**, in order to determine the shield height of the extended shield support frames (10) corresponding to the face opening height, a flexible hose level (17) with a liquid-filled hose (18) is installed between the roof canopy (13) and floor skid (11) of individual shield support frames (10), and a pressure sensor (19) is arranged on the skid-side end of the hose (18), wherein, in addition to considering a longitudinal and/or transverse inclination of the shield support frame (10) during height determination, an inclination measuring device (25) that permits the measurement of at least two tilting axes towards the horizontal is arranged on the roof canopy (13), and the pressure sensor (19) and inclination measuring device (25) are connected to an analyzing and control unit.

2. Face equipment according to claim 1, **characterized in that** the flexible hose level (17) is designed as a closed flexible hose level with a pressure-filled hose (18) that is closed on both sides and connected to a pressure accumulator.

3. Face equipment according to claim 1, **characterized in that** the flexible hose level (17) is designed as a flexible hose level open on one side, with a hose (18) connected to an overflow forming the highest point of the flexible hose level (17).

4. Face equipment according to one of claims 1 to 3, **characterized in that** the pressure sensor (19) arranged on the skid-side end of the hose (18) is an absolute pressure sensor.

5. Face equipment according to one of claims 1 to 4, **characterized in that** a second pressure sensor (20) is additionally arranged on the roof canopy-side end of the hose (18).

6. Face equipment according to claim 5, **characterized in that** the second pressure sensor (20) is an absolute pressure sensor.

7. Face equipment according to one of claims 1 to 3 and 5, **characterized in that** the two pressure sensors (19, 20) arranged on the skid-side and roof canopy-side ends of the hose (18) are each relative pressure sensors that measure the atmospheric pressure against the fluid pressure.

8. Face equipment according to one of claims 1 to 7, **characterized in that** the hose (18) running between the roof canopy (13) and floor skid (11) of the shield support frame (10) extends beyond the skid-side pressure sensor (19) until the face conveyor (21), and that a pressure sensor (29) is arranged on the end of the hose (18, 28) secured to the face conveyor (21).

9. Face equipment according to one of claims 1 to 7, **characterized in that** the hose (18) running between the floor skid (11) and roof canopy (13) extends beyond the roof canopy-side pressure sensor (20) until the face conveyor (21), and that a pressure sensor is arranged on the end of the hose (18, 30) secured to the face conveyor (21).

10. Face equipment according to one of claims 1 to 7, **characterized in that** a separate, liquid-filled hose (33) closed at both ends with pressure sensors (29, 34) secured to its respective end sides is installed between the floor skid (11) of the shield support frame (10) and the face conveyor (21) as an additional flexible hose level (31), the pressure sensor (34) secured to the floor skid (11) of the shield support frame (10) forms an equipotential coupling point with the pressure sensor (19) arranged at the end of the hose (18) installed between the roof canopy (13) and floor skid (11) of the shield support frame (10).

11. Face equipment according to one of claims 8 to 10, **characterized in that** the hose (33) or flexible hose branch (28, 30) running between the shield support frame (10) and face conveyor (21) is exposed to the force of a retaining spring.

12. Face equipment according to one of claims 1 to 11, **characterized in that** an inclination measuring device located on the same component of the shield support frame (10) and a pressure sensor each are arranged in a shared sensor housing with shared power supply and measuring line connector.

13. Face equipment according to one of claims 1 to 12, **characterized in that**, in addition to the inclination measuring device (25) situated on the roof canopy (13) of the shield support frame (10), another inclination measuring device (26) with the same design is arranged on its floor skid (11).

14. Face equipment according to one of claims 8 to 11, **characterized in that** an inclination measuring device (27) is arranged on the face conveyor (21).

15. Face equipment according to one of claims 1, 13 or 14, **characterized in that** the inclination measuring device (25, 26, 27) consists of two uniaxial inclination sensors.

16. Face equipment according to one of claims 1, 13 or 14, **characterized in that** the inclination measuring device (25, 26, 27) consists of a biaxial inclination sensor.

17. Face equipment according to one of claims 1, 13 or 14, **characterized in that** the inclination measuring device (25, 26, 27) consists of a triaxial inclination sensor.

## Revendications

1. Equipement de taille pour l'extraction mécanique en exploitation par tailles chassantes à front continu, en particulier dans une mine de houille souterraine, avec un convoyeur de front de taille (21) disposé le long du front de taille, un moyen d'extraction (22) mobile le long du convoyeur de taille (21) et avec des éléments de soutènement par bouclier (10) accrochés au convoyeur de taille (21) en formant un angle avec celui-ci, **caractérisé en ce que** pour déterminer la hauteur de bouclier correspondant à la hauteur de l'ouverture de taille de l'élément de soutènement par bouclier (10) déployé, un niveau à eau (17) avec un flexible (18) rempli de liquide est posé sur les éléments de soutènement par bouclier (10) individuels entre leur rallonge suspendue (13) et leur semelle (11) et un capteur de pression (19) est disposé à l'extrémité côté semelle du flexible (18), un système de mesure d'inclinaison (25) permettant la mesure d'au moins deux axes de basculement par rapport à l'horizontale étant en plus disposé pour prendre en considération une inclinaison longitudinale et/ou transversale de l'élément de soutènement par bouclier (10) lors de la détermination de hauteur sur la rallonge suspendue (13) et un capteur de pression (19) et un système de mesure d'inclinaison (25) étant reliés à une unité d'évaluation et de commande.

2. Equipement de taille selon la revendication 1 **caractérisé en ce que** le niveau à eau (17) est constitué comme un niveau à eau fermé avec un flexible fermé des deux côtés, rempli sous pression et raccordé à un accumulateur de pression (18).

3. Equipement de taille selon la revendication 1 **caractérisé en ce que** le niveau à eau (17) est constitué comme niveau à eau ouvert d'un côté avec un flexible (18) raccordé à un trop-plein formant le point le plus élevé du niveau à eau (17).

4. Equipement de taille selon l'une quelconque des revendications 1 à 3 **caractérisé en ce que** le capteur de pression (19) disposé à l'extrémité du flexible (18), côté semelle, est un capteur de pression absolue.

5. Equipement de taille selon l'une quelconque des revendications 1 à 4 **caractérisé en ce qu'**un deuxième capteur de pression (20) est en plus disposé à l'extrémité du flexible (18), côté rallonge suspendue.

6. Equipement de taille selon la revendication 5 **caractérisé en ce que** le deuxième capteur de pression (20) est un capteur de pression absolue.

7. Equipement de taille selon l'une quelconque des revendications 1 à 3 et 5 **caractérisé en ce que** les deux capteurs de pression (19, 20) disposés aux extrémités du flexible (18), côté semelle et côté rallonge suspendue sont respectivement des capteurs de pression relative mesurant la pression atmosphérique par rapport à la pression du liquide.

8. Equipement de taille selon l'une quelconque des revendications 1 à 7 **caractérisé en ce que** le flexible (18) passant entre la rallonge suspendue (13) et la semelle (11) de l'élément de soutènement par bouclier (10) s'étend au-delà du capteur de pression (19) côté semelle jusqu'au convoyeur de taille (21) et un capteur de pression (29) est disposé à l'extrémité du flexible (18, 28), fixée au convoyeur de taille (21).

9. Equipement de taille selon la revendication 1 à 7 **caractérisé en ce que** le flexible (18) passant entre la semelle (11) et la rallonge suspendue (13) s'étend au-delà du capteur de pression (20) côté rallonge suspendue jusqu'au convoyeur de taille (21) et un capteur de pression est disposé à l'extrémité du flexible (18, 30), fixée au convoyeur de taille (21).

10. Equipement de taille selon l'une quelconque des revendications 1 à 7 **caractérisé en ce qu'**entre la semelle (11) de l'élément de soutènement par bouclier (10) et le convoyeur de taille (21), un flexible (33) spécial rempli de liquide fermé aux deux extrémités avec respectivement des capteurs de pression (29, 34) raccordés aux extrémités, est posé en tant que niveau à eau supplémentaire (31) et le capteur de pression (34) fixé à la semelle (11) de l'élément de soutènement par bouclier (10) forme un point de couplage à la même hauteur avec le capteur de pression (19) disposé à l'extrémité du flexible (18) posé entre la rallonge suspendue (13) et la semelle (11) de l'élément de soutènement par bouclier (10).

11. Equipement de taille selon l'une quelconque des revendications 8 à 10 **caractérisé en ce que** le flexible (33) ou la branche de flexible (28, 30) passant entre l'élément de soutènement par bouclier (10) et le convoyeur de taille (21) est sollicité par un ressort de rappel.

12. Equipement de taille selon l'une quelconque des revendications 1 à 11 **caractérisé en ce qu'**un système de mesure d'inclinaison et un capteur de pression disposés sur le même composant de l'élément de soutènement par bouclier (10) sont disposés respectivement dans un boîtier de détection commun avec une alimentation en courant commune et une connexion de câble de mesure.

13. Equipement de taille selon l'une quelconque des revendications 1 à 12 **caractérisé en ce qu'**en plus du système de mesure d'inclinaison (25) disposé sur la rallonge suspendue (13) de l'élément de soutènement par bouclier (10), un autre système de mesure d'inclinaison (26) de même structure est disposé sur sa semelle (11).

14. Equipement de taille selon l'une quelconque des revendications 8 à 11 **caractérisé en ce qu'**un système de mesure d'inclinaison (27) est disposé sur le convoyeur de taille (21).

15. Equipement de taille selon l'une quelconque des revendications 1, 13 ou 14 **caractérisé en ce que** le système de mesure d'inclinaison (25, 26, 27) est composé de deux capteurs d'inclinaison monoaxiaux.

16. Equipement de taille selon l'une quelconque des revendications 1, 13 ou 14 **caractérisé en ce que** le système de mesure d'inclinaison (25, 26, 27) est composé d'un capteur d'inclinaison biaxial.

17. Equipement de taille selon l'une quelconque des revendications 1, 13 ou 14 **caractérisé en ce que** le système de mesure d'inclinaison (25, 26, 27) est composé d'un capteur d'inclinaison à trois axes.

## Fig 1a

## Fig 1b

Fig 2

Fig 3

Fig 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009103303 A
- DE 4333032 C2